# EUROPÄISCHE PATENTSCHRIFT

(11) **EP 3 647 677 B1**
(45) Veröffentlichungstag und Bekanntmachung des Hinweises auf die Patenterteilung: **05.10.2022**
(21) Anmeldenummer: 18203053.6
(22) Anmeldetag: 29.10.2018
(51) Int. Cl.: F24H 7/04, F28D 20/00

(54) **ENERGIESPEICHER ZUM SPEICHERN VON ELEKTRISCHER ENERGIE ALS WÄRME UND VERFAHREN HIERZU**
ENERGY STORAGE DEVICE FOR THE STORAGE OF ELECTRICAL ENERGY USED AS HEAT AND METHOD THEREFOR
RÉSERVOIR D'ÉNERGIE PERMETTANT LE STOCKAGE D'ÉNERGIE ÉLECTRIQUE EN TANT QUE CHALEUR ET PROCÉDÉ CORRESPONDANT

(43) Veröffentlichungstag der Anmeldung: 06.05.2020
(73) Patentinhaber: Lumenion GmbH, 10829 Berlin (DE)
(72) Erfinder: ZWINKELS, Andrew, 10827 Berlin (DE)
(74) Vertreter: Ridderbusch, Oliver

(56) Entgegenhaltungen:
- EP-A1- 3 438 423
- WO-A1-2010/060524
- WO-A1-2017/037026
- DE-U1-202013 002 455

## Beschreibung

Die vorliegende Erfindung bezieht sich in einem ersten Aspekt auf einen Energiespeicher zum Speichern von elektrischer Energie in Form von Wärmeenergie nach dem Oberbegriff des Anspruchs 1.

In einem zweiten Gesichtspunkt betrifft die Erfindung ein Verfahren zum Speichern von Energie mittelts eines Energiespeichers, in dem elektrische Energie in Form von Wärmeenergie speicherbar ist und Wärmeenergie entnehmbar ist, nach dem Oberbegriff des Anspruchs 12.

Energiespeicher für elektrische Energie sind von immenser wirtschaftlicher Bedeutung. Insbesondere durch die steigende Nutzung von Sonnen- und Windenergie schwanken die erzeugten Mengen elektrischer Energie zeitlich stark. Dadurch entstehen vorrübergehend beträchtliche Überschüsse elektrischer Energie, welche zur Zeit nicht oder nur zu kleinem Teil effizient gespeichert werden können. Elektrochemische Speicher (Batterien) bieten trotz hoher Kosten nur sehr geringe Speichermengen. Größere Energiemengen können in Form von Wärme gespeichert werden. Es wird erwartet, dass derartige Energiespeicher eine entscheidende Rolle bei einer volkswirtschaftlich stärkeren Nutzung regenerativer Energiequellen spielen. So muss eine Speichermenge von Energiespeichern voraussichtlich mit dem Anteil wachsen, den Sonnen- und Windenergie an der insgesamt erzeugten elektrischen Energie in einem Staat haben.

Ein gattungsgemäßer Energiespeicher zum Speichern von elektrischer Energie in Form von Wärmeenergie umfasst einen elektrischen Heizer zum Umwandeln von elektrischer Energie in Wärmeenergie und einen Wärmespeicherkörper zum Speichern von Wärmeenergie des elektrischen Heizers.

In entsprechender Weise umfasst ein gattungsgemäßes Verfahren zum Speichern von elektrischer Energie in Form von Wärmeenergie mit einem Energiespeicher, welcher einen elektrischen Heizer und Wärmespeicherkörper umfasst, zumindest die folgenden Schritte:
- Umwandeln von elektrischer Energie in Wärmeenergie durch den elektrischen Heizer und
- Übertragen der Wärmeenergie auf Wärmespeicherkörper zur Energiespeicherung.

Gattungsgemäße Energiespeicher wurden beispielsweise von der Anmelderin in EP 3 139 108 A1 oder in EP 3 139 107 A1 sowie in der nachveröffentlichten europäischen Patentanmeldung EP 3 438 423 A1 beschrieben. Aus DE 20 2013 002 455 U ist ein weiterer elektrisch beheizbarer Wärmespeicher bekannt. Die Umwandlung von elektrischer Energie in Wärme erfolgt mit elektrischen Heizwiderständen, die von Strömungskanälen für Arbeitsfluid umgeben sind. Das erhitzte Arbeitsfluid kann über eine Turbine geleitet werden, um mit Hilfe eines Generators erneut elektrische Energie zu erzeugen. WO 2010 060 524 A1 beschreibt einen weiteren Wärmespeicher zur vorübergehenden Speicherung von elektrischer Energie in Form von Wärme. Als Speichermedien werden Flüssigkeiten und Feststoffe, insbesondere Stahl, Guss und mineralische Schüttstoffe, erwähnt, wobei Vorteile von Feststoffen gegenüber Flüssigkeiten in der einfachen Handhabung und hohen thermischen Speicherkapazität gesehen werden. Eine Wärmeleitfähigkeit von Feststoffen wird im Vergleich zu Flüssigkeiten als eher gering angesehen und soll durch eine Vielzahl von Strömungsräumen ausgeglichen werden, welche das Speichermedium durchziehen. Ein Fluid wird durch die Strömungsräume geleitet, um dem Speichermedium Wärmeenergie zuzuführen oder zu entnehmen.

Zum Speichern großer Energiemengen können die Wärmespeicherkörper Metallkörper sein, deren Höhe mehrere Meter oder sogar über 10m betragen können. Die Metallkörper werden über einen großen Temperaturbereich erhitzt, beispielsweise von Raumtemperatur bis auf eine Temperatur nahe dem Schmelzpunkt des Metallkörpers, zum Beispiel 600°C. Durch diese starken Temperaturänderungen erfährt der Metallkörper beträchtliche thermische Ausdehnungen. Diese können mechanische Belastungen angrenzender Komponenten des Energiespeichers zur Folge haben. Problematisch bei bekannten Energiespeichern ist, wie bei geringen Kosten und einem möglichst einfachen Aufbau Belastungen durch thermische Ausdehnungen gering gehalten werden können.

Als eine **Aufgabe** der Erfindung kann das Bereitstellen eines Energiespeichers angesehen werden, bei welchem thermische Belastungen möglichst gering sind und gleichzeitig ein Aufbau möglichst kostengünstig ist und ein effizientes Speichern und Entnehmen von großen Energiemengen möglich sind. Außerdem soll ein entsprechendes Verfahren angegeben werden.

Diese Aufgabe wird durch den Energiespeicher mit den Merkmalen des Anspruchs 1 und durch das Verfahren mit den Merkmalen des Anspruchs 12 gelöst.

Vorteilhafte Varianten des erfindungsgemäßen Energiespeichers und des erfindungsgemäßen Verfahrens sind Gegenstand der abhängigen Ansprüche und werden außerdem in der folgenden Beschreibung erläutert.

Bei dem oben genannten gattungsgemäßen Energiespeicher ist erfindungsgemäß vorgesehen, dass mehrere Metallstangen vorgesehen sind, welche aufrecht angeordnet sind. Diese Metallstangen werden wegen ihrer aufrechten Anordnung nachfolgend als Vertikalstangen bezeichnet. Die Vertikalstangen sind an ihren unteren Enden gehalten, so dass eine thermische Expansion nach oben frei ermöglicht ist. Der obere Bereich einer Vertikalstange ist also nicht in vertikaler Richtung fixiert. An jeder Vertikalstange sind mehrere Metallstangen (nachfolgend: Horizontalstangen) befestigt, welche sich mit ihren Längsachsen in horizontaler Richtung erstrecken und ebenfalls dem Speichern von Wärmeenergie des elektrischen Heizers dienen. Die beiden Enden jeder Horizontalstange sind frei (das heißt, die Enden sind nicht in ihrer Position in horizontaler Richtung fixiert), so dass eine thermische Expansion in horizontaler Richtung frei ermöglicht ist. Die Horizontalstangen und fakultativ auch die Vertikalstangen können als Teil der zuvor genannten Wärmespeicherkörper angesehen werden.

In entsprechender Weise ist bei dem oben genannten gattungsgemäßen Verfahren erfindungsgemäß vorgesehen:
- dass die Wärmespeicherkörper mehrere aufrecht angeordnete Vertikalstangen aus Metall umfassen,
- dass die Vertikalstangen an ihren unteren Enden gehalten werden, so dass sie beim Erwärmen frei nach oben thermisch expandieren,
- dass an jeder Vertikalstange mehrere Horizontalstangen aus Metall gehalten werden, welche sich in horizontaler Richtung erstrecken und mit denen Wärmeenergie des elektrischen Heizers gespeichert wird,
- dass die horizontalen Enden jeder Horizontalstange frei sind, so dass die Horizontalstangen beim Erwärmen in horizontaler Richtung frei expandieren.

Durch die Gestaltung und Lagerung der Metallstangen werden negative Auswirkungen von thermischen Ausdehnungen weitgehend vermieden: Bei einer Stangenform treten die Wesentlichen thermischen Ausdehnungen in Längsrichtung der Stange auf. In der Längsrichtung soll daher eine freie thermische Ausdehnung ermöglicht sein. Hierzu können die Metallstangen lediglich einen einzigen Befestigungspunkt haben, der sie in Längsrichtung fixiert. Hätten die Metallstangen hingegen zwei Befestigungspunkte, die in Längsrichtung zwei Stellen einer Metallstange fixieren würden, so würden thermische Ausdehnungen zu Spannungen führen. Die Vertikalstangen sind in ihrem unteren Bereich mit einem Fundament verbunden. Nach oben können die Vertikalstangen hingegen frei thermisch expandieren. In horizontaler Richtung ist wegen der Stangenform eine thermische Ausdehnung gering und unproblematisch; zudem sind die Vertikalstangen beabstandet voneinander, so dass thermische Expansionen in horizontaler Richtung ohnehin unproblematisch sind. Jede Horizontalstange kann genau einen Lagerungspunkt haben, insbesondere in einem mittigen Bereich in Längsrichtung der Stange gesehen. Die beiden Stangenenden (die also in Längsrichtung die Stange begrenzen) sind hingegen nicht in horizontaler Richtung fixiert, sondern können sich frei in horizontaler Richtung ausdehnen. Indem die Vertikalstangen an den Horizontalstangen gelagert sind, sind die Horizontalstangen außerdem beabstandet zu einem Fundament, womit ein Wärmeübertrag auf das Fundament reduziert ist.

Weil die Horizontalstangen durch einen Teil der Wärmespeicherkörper selbst (nämlich durch die Vertikalstangen) getragen werden, ist nicht zusätzlich zu den Wärmespeicherkörpern ein zusätzliches Gestell zum Halten der Horizontalstangen erforderlich. Gleichzeitig ist das Gewicht der Vertikalstangen im Vergleich zum Gewicht der Horizontalstangen klein, so dass ein Wärmetransfer zu einem Fundament gering ist.

Die Metallstangen können beispielsweise 12 Meter lang sein, womit sie von üblichen LKW noch einfach transportiert und vor Ort zusammengesetzt werden können. Bei solchen beträchtlichen Ausmessungen sind die thermischen Ausdehnungen und mechanische Stabilität wichtige Aspekte.

Die Horizontalstangen sind nicht untereinander verbunden. Ebenso sind die Vertikalstangen nicht miteinander verbunden. Vielmehr werden sie über dasselbe Fundament gehalten. Ein Fundament trägt somit die Vertikal- und Horizontalstangen, wobei allein die unteren Bereiche der Vertikalstangen mit dem Fundament verbunden / in Kontakt sind. Dadurch ist ein Wärmeübertrag auf das Fundament gering. Thermische Spannungen innerhalb des Fundaments sind dadurch verhältnismäßig gering. Das Fundament kann beispielsweise ein Betonblock sein und die unteren Enden der Vertikalstangen können einbetoniert sein. Alternativ kann das Fundament auch eine Metallplatte sein, in oder an welcher die Vertikalstangen gehalten sind.

Zum Reduzieren eines Wärmestroms nach unten kann außerdem eine Unterseite des Fundaments kleiner sein als eine Oberseite des Fundaments. Anders formuliert kann die Unterseite kleiner sein als eine Horizontalfläche, die durch die äußersten Vertikalstangen aufgespannt wird. Das Fundament kann beispielsweise einen T-förmigen Querschnitt haben. Eine T-Form ist ebenfalls zum Reduzieren von Materialspannungen innerhalb des Fundaments vorteilhaft, da sich der obere Fundamentteil stärker erwärmen und in horizontaler Richtung ausdehnen wird als der untere Fundamentteil. Die T-Form hat zur Folge, dass eine stärkere Ausdehnung des oberen Fundamentteils nur geringe Materialspannungen zu dem kühleren unteren Fundamentteil hervorruft.

Eine Wärmeisoliermatte kann über dem Fundament und unter den Horizontalstangen angeordnet sein. Die Vertikalstangen können sich dabei durch die Wärmeisoliermatte erstrecken. Die Wärmeisoliermatte kann beispielsweise 1 Meter dick sein und kann aus einem porösen Dämmmaterial bestehen, dessen Dichte vorzugsweise höchstens ein Viertel so hoch ist wie die Dichte der Metallstangen oder des Fundaments.

Es kann auch eine obere Wärmeisoliermatte oberhalb der Horizontalstangen angeordnet sein. Die Vertikalstangen können sich durch die obere Wärmeisoliermatte nach oben erstrecken.

An ihrem oberen Bereich (insbesondere oberhalb der oberen Wärmeisoliermatte) können die Vertikalstangen in horizontaler Richtung gestützt sind, wobei sie aber nach oben frei expandieren können. Beispielsweise können die Vertikalstangen von einer ringförmigen Stütze in ihrem oberen Bereich umgeben sein, welche keine Begrenzung / keinen Halt in vertikaler Richtung erzeugt. Hierdurch kann die mechanische Stabilität deutlich erhöht werden. Alternativ kann auch jede Vertikalstange in ihrem oberen Bereich ein oder mehrere Halterungslöcher umfassen. Die Halterungslöcher verlaufen insbesondere horizontal durch die Vertikalstange, wobei zum Halten der Vertikalstange ein Bolzen oder anderes Befestigungsmittel durch das Halterungsloch verläuft. Der Bolzen kann an einem Gestell befestigt sein. Durch den Bolzen wird die zugehörige Vertikalstange lediglich in den horizontalen Richtungen fixiert, während eine thermische Expansion in vertikaler Richtung erlaubt bleibt. Hierzu kann das Halterungsloch in vertikaler Richtung größer sein als der Bolzen, insbesondere mindestens doppelt so groß. Die Halterungslöcher können bevorzugt eine längliche Form haben, die in vertikaler Richtung großer als in horizontaler Richtung ist.

Es kann auch ein Rahmengestell vorhanden sein, welches mehrere der Vertikalstangen in horizontaler Ebene stützt, aber in vertikaler Richtung eine freie Expansion der Vertikalstangen erlaubt. Es kann bevorzugt sein, dass das Rahmengestell oder die Stütze die Metallstangen nur berühren, ohne durch beispielsweise Bolzen mit den Metallstangen fixiert zu sein.

Für eine hohe Stabilität und eine einfache Lagerung kann jede Horizontalstange mittig (in Längsrichtung gesehen) oder an ihrem Schwerpunkt (in Längsrichtung gesehen) an einer der Vertikalstangen gelagert sein. Als Lagerung genügt es, wenn die Horizontalstangen an der jeweils zugehörigen Vertikalstange aufliegen, also nicht weiter fixiert sind.

Beispielsweise kann jede Vertikalstange mehrere Bohrungen umfassen, die in horizontaler Richtung verlaufen und jeweils der Aufnahme einer der Horizontalstangen dienen. Durch Bohrungen ist eine einfache Lagerung möglich, welche eine horizontale Expansion der Horizontalstangen erlaubt. Bei einer vertikalen Expansion der Vertikalstangen werden die getragenen Horizontalstangen einfach mit gehoben oder gesenkt, ohne dass irgendwelche Spannungen auftreten würden.

Die Bohrungen in jeder Vertikalstange haben vorzugsweise einen Durchmesser, der mindestens 20% größer ist, vorzugsweise mindestens 50% größer, als ein Durchmesser der gehaltenen Horizontalstangen. Hierdurch sind thermische Expansionen der Horizontalstangen in vertikaler Richtung unproblematisch; zudem wird hierdurch ein Zusammenbau des Wärmespeicherkörpers erleichtert.

Für einen leichteren Zusammenbau können die Horizontalstangen auch eine Markierung oder Positionierhilfe umfassen, durch welche ein mittiges Positionieren der Horizontalstangen in den Bohrungen der Vertikalstangen erleichtert wird. Beispielsweise kann die Mitte einer Horizontalstange farblich markiert sein. Auch kann als Positionierhilfe eine Verformung oder ein Aufsatz auf der Horizontalstange vorgesehen sein, beispielsweise so, dass die Horizontalstange nur bis zu einem Anschlag durch eine Bohrung der Vertikalstangen geschoben werden kann und der Anschlag so angeordnet ist, dass hiermit eine mittige Positionierung gewährleistet ist.

Die Vertikalstangen können mit ihren Längsachsen parallel zueinander angeordnet sein und als massive Stangen oder als hohle Röhren gebildet sein. Bei hohlen Röhren ist ein Wärmetransfer zum Fundament geringer, wobei die Stabilität nach wie vor das Tragen der Horizontalstangen erlaubt. Die Gestaltung durch massive Stangen hat hingegen den Vorteil, größere Energiemengen auf gleichem Raum speichern zu können.

Die Horizontalstangen können prinzipiell ebenfalls durch hohle Röhren gebildet sein, wodurch ein besonders schneller Wärmetransfer auf ein durchströmendes Wärmetransferfluid möglich ist. Um größere Energiemengen zu speichern, können aber massive Stangen für die Horizontalstangen bevorzugt sein.

Die Metallstangen können eine zylindrische Stangenform mit einer prinzipiell beliebigen Querschnittsform haben. Unter der Stangenform kann verstanden werden, dass die Länge einer Metallstange mindestens 5mal oder mindestens 10mal so groß ist wie ihr Durchmesser. Haben die Metallstangen einen eckigen Querschnitt, kann als Durchmesser ihre größte Abmessung innerhalb ihrer Querschnittsebene verstanden werden. Als Material der Metallstangen ist beispielsweise Stahl geeignet.

Die Horizontalstangen, die an derselben Vertikalstange befestigt sind, können in verschiedenen Höhen an dieser Vertikalstange befestigt sein. Eine Vertikalstange kann demnach an verschiedenen Höhen Bohrungen zum Halten der Horizontalstangen umfassen.

Zum Übertragen von Wärme wird ein Wärmetransferfluid benutzt. Dieses kann prinzipiell ein beliebiges Gas, Gasgemisch, Dampf oder Flüssigkeit sein. Insbesondere kann ein Gas/Gasgemisch ohne Sauerstoff verwendet werden, um Korrosion zu vermeiden. Stattdessen kann ein inertes Gas, beispielsweise Stickstoffdioxid, verwendet werden. Es kann vorgesehen sein, dass das Wärmetransferfluid frei und direkt an den Metallstangen entlang geleitet wird. Bei dieser Ausführung wird das Wärmetransferfluid also nicht durch Röhren geleitet, welche neben den Vertikal- und Horizontalstangen verlaufen würden. Wenn das Wärmetransferfluid, beispielsweise ein Gas, an den Metallstangen entlang strömt, ist der Strömungsverlauf wichtig, um einen möglichst großen Wärmetransfer zwischen dem Gas und den Metallstangen zu ermöglichen.

Für einen großen Wärmeaustausch zwischen dem Wärmetransferfluid und den Horizontalstangen ist die Anordnung der Horizontalstangen relevant: So können die Horizontalstangen von einer der Vertikalstangen in der Höhe versetzt sein zu den Horizontalstangen einer direkt benachbarten Vertikalstange. Die Horizontalstangen benachbarter Vertikalstangen sind demnach in ihren Höhen versetzt zueinander. Dadurch kann ein Gas oder anderes Wärmetransferfluid nicht einfach in horizontaler Richtung geradlinig zwischen den Horizontalstangen durchströmen, sondern muss gemäß dem Höhenversatz auf einer welligen Bahn durch die Anordnung an Horizontalstangen durch. Dadurch wird über eine größere Oberfläche der Horizontalstangen effizient Wärmeenergie mit dem Wärmetransferfluid ausgetauscht.

Anstelle oder zusätzlich zu einem Versatz der Horizontalstangen verschiedener Vertikalstangen, können auch die Horizontalstangen, die von derselben Vertikalstange gehalten werden, in einer horizontalen Richtung versetzt zueinander sein. Das heißt, sie sind versetzt zueinander in einer Richtung, die in der horizontalen Ebene liegt und senkrecht zur Längsachse der Horizontalstangen liegt. So können vertikal benachbarte Bohrungen derselben Vertikalstange in einer Horizontalrichtung zueinander versetzt sein. Hierdurch sind die Horizontalstangen, die in diesen Bohrungen gehalten werden, in einer Horizontalrichtung, die senkrecht zu den Längsachsen dieser Horizontalstangen steht, zueinander versetzt.

Als vertikale Richtung beziehungsweise aufrechte Anordnung soll die Schwerkraftsrichtung verstanden werden. Eine horizontale Richtung steht demgemäß senkrecht zur Schwerkraftsrichtung.

Die vertikalen Metallstangen können in ihrem unteren Bereich von Stützelementen oder einem porösen Block gehalten werden, welche(r) wiederum auf dem Fundament steht / stehen. Beispielsweise können als Stützelemente Röhren vorgesehen sein, wobei jede Röhre in dem Fundament gehalten ist und auf der Röhre jeweils eine der Vertikalstangen gesetzt ist. Hierdurch ist der Wärmetransfer zum Fundament weiter reduziert. Allerdings ist die mechanische Stabilität unter Umständen geringer. Gleiches gilt für einen porösen Block oder Dämmblock, welcher Lufthohlräume umfasst, um den Wärmetransfer nach unten zu reduzieren.

Es kann vorgesehen sein, dass die Vertikalstangen nicht fest im Fundament verbunden sind, sondern bloß lose auf diesem stehen. Insbesondere in diesem Fall kann eine Stützwand oder ein Stützgestell sinnvoll sein, welches die Vertikalstangen und/oder die Horizontalstangen stützt, um ein Umkippen zu verhindern.

Es kann auch vorgesehen sein, dass Horizontalstangen durch jeweils zwei Vertikalstangen gehalten werden. Hierbei sind die Horizontalstangen aber nur gestützt (beispielsweise indem sie durch Bohrungen in Vertikalstangen verlaufen), ohne dass sie in horizontaler Richtung fixiert wären. Somit kann nach wie vor eine freie Wärmeexpansion einer Horizontalstange in ihrer Längsrichtung erfolgen.

Der elektrische Heizer kann prinzipiell beliebig gestaltet sein, solange er elektrische Energie möglichst vollständig, beispielsweise zu mindestens 80%, in Wärmeenergie umwandelt. Ein elektrischer Heizer kann insbesondere resistiv arbeiten, das heißt er wird von elektrischem Strom durchflossen und aufgrund des elektrischen Widerstands erhitzt er sich dabei. Über den elektrischen Heizer können große Leistungen in den Energiespeicher eingespeist werden, beispielsweise bis 8 MW. Mehrere räumlich getrennte Heizeinheiten können auch gemeinsam den elektrischen Heizer bilden.

Der elektrische Heizer kann mit einem externen Stromnetz verbunden sein und dazu betrieben werden, immer dann elektrische Energie aufzunehmen und in Wärme umzuwandeln, wenn vorrübergehend ein Überangebot an elektrischer Energie vorliegt. Von dem Wärmespeicher ausgegebene Wärmeenergie, also erhitztes Wärmetransferfluid, kann insbesondere zu Heizzwecken oder zum Erzeugen elektrischer Energie genutzt werden. So kann mit dem erhitzten Wärmetransferfluid oder mit einem anderen Arbeitsfluid, welches durch das erhitzte Wärmetransferfluid erwärmt wird, eine Motor-Generator-Einheit oder eine Turbinen-Generator-Einheit angetrieben werden, um elektrische Energie zu erzeugen.

Sowohl das Laden als auch Entladen des Energiespeichers kann über das Wärmetransferfluid erfolgen. Ist der elektrische Heizer eingeschaltet, erhitzt er das Wärmetransferfluid, welches sodann Wärme an die Metallstangen abgibt. Ist hingegen der elektrische Heizer ausgeschaltet, kann das Wärmetransferfluid Wärme von den Metallstangen aufnehmen. Die Metallstangen können in einem Innenraum eines Gehäuses angeordnet sein, wobei das Wärmetransferfluid frei durch den Innenraum geleitet wird. Außerhalb des Gehäuses wird das Wärmetransferfluid entlang eines Kreislaufes geleitet, in welchem ein Wärmetauscher angeordnet sein kann, um Wärmeenergie an ein anderes Fluid/Arbeitsfluid abzugeben. Das Gehäuse kann auch als Druckgefäß gestaltet sein, wobei das Wärmetransferfluid unter Druck durch den Innenraum des Gehäuses, entlang der Metallstangen, befördert wird.

Zum Befördern des Wärmetransferfluides wird (je nach Art des Wärmetransferfluides) ein Ventilator, ein Kompressor oder eine Pumpe verwendet.

Der elektrische Heizer kann innerhalb des Innenraums des Gehäuses angeordnet sein oder auch außerhalb des Gehäuses an einer Leitung des Wärmetransferfluides.

Bei alternativen Gestaltungen kann der elektrische Heizer auch benachbart zu den Metallstangen angeordnet sein und durch Wärmestrahlung Wärmeenergie auf diese übertragen. Zur Entnahme von Wärmeenergie kann das Wärmetransferfluid auch durch Rohrleitungen geleitet werden, welche benachbart zu den Metallstangen verlaufen, wobei das Wärmetransferfluid nicht direkt die Metallstangen kontaktiert.

Der Ausdruck "Metallstangen" bezeichnet vorliegend sowohl Horizontalstangen als auch Vertikalstangen. Die Metallstangen bilden den Teil des Energiespeichers, welcher dem Speichern von Wärmeenergie dient. Das heißt, von einer im Betrieb des Energiespeichers aufgenommenen Wärmeenergie wird mindestens 60% oder mindestens 80% in den Metallstangen gespeichert, während die übrigen Energieanteile auf beispielsweise das Wärmetransferfluid oder Gehäusekomponenten verteilt sind. Alternativ kann auch die Wärmekapazität der Metallstangen mindestens 60% oder mindestens 80% der Wärmekapazität des gesamten Energiespeichers betragen.

Unter einem "freien Expandieren in einer Richtung" soll im vorliegenden Text verstanden werden, dass ein Körper sich in dieser Richtung ausdehnen kann, ohne gegen einen Widerstand drücken zu müssen. So kann ein Körper in einer Richtung nicht frei expandieren, wenn er entlang dieser Richtung an zwei Stellen fixiert ist, denn die Fixierung verhindert eine Expansion. Hingegen ist es freies Expandieren möglich, wenn ein Körper nur lose aufliegt oder nur an einer Stelle fixiert ist, womit er sich von der fixierten Stelle ausgehend in entgegengesetzte Richtungen ausdehnen kann.

Die als zusätzliche Vorrichtungsmerkmale beschriebenen Eigenschaften der Erfindung ergeben bei bestimmungsgemäßer Verwendung auch Varianten des erfindungsgemäßen Verfahrens.

Weitere Merkmale der Erfindung werden nachstehend mit Bezug auf die beigefügten schematischen Figuren beschrieben:
- Fig. 1: ist eine schematische Perspektivdarstellung von Komponenten eines Ausführungsbeispiels eines erfindungsgemäßen Energiespeichers;
- Fig. 2: ist eine Seitenansicht zu Fig. 1;
- Fig. 3: ist eine Frontansicht zu Fig. 1;
- Fig. 4: ist eine schematische Seitenansicht von Komponenten eines weiteren Ausführungsbeispiels eines erfindungsgemäßen Energiespeichers;
- Fig. 5: ist eine schematische Perspektivdarstellung zu Fig. 4;
- Fig. 6: ist eine schematische Darstellung eines weiteren Ausführungsbeispiels eines erfindungsgemäßen Energiespeichers und
- Fig. 7: ist eine schematische Darstellung eines wiederum weiteren erfindungsgemäßen Energiespeichers.

Gleiche und gleich wirkende Bestandteile sind in den Figuren in der Regel mit denselben Bezugszeichen gekennzeichnet.

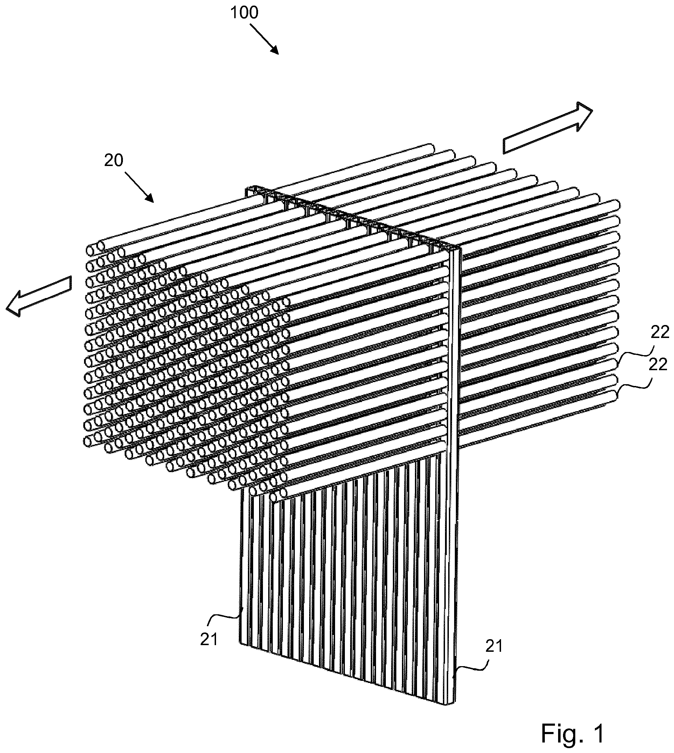

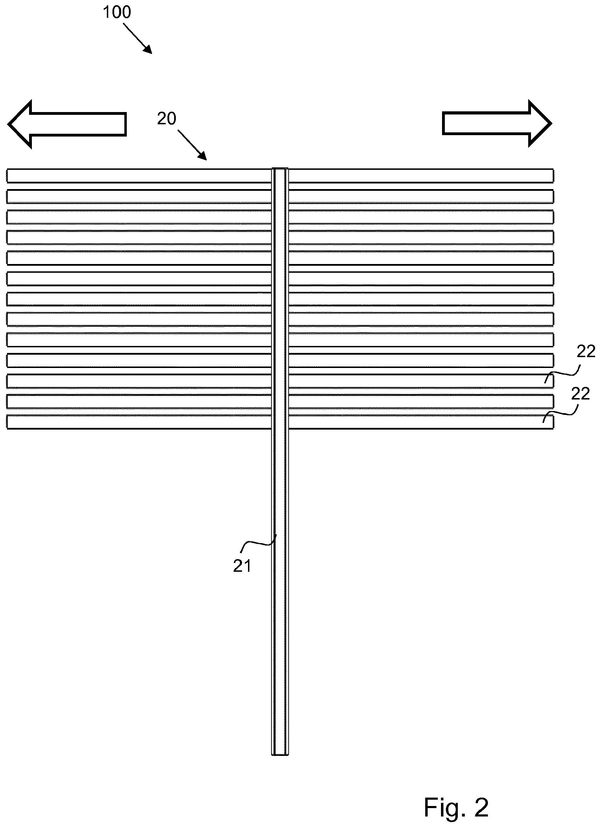

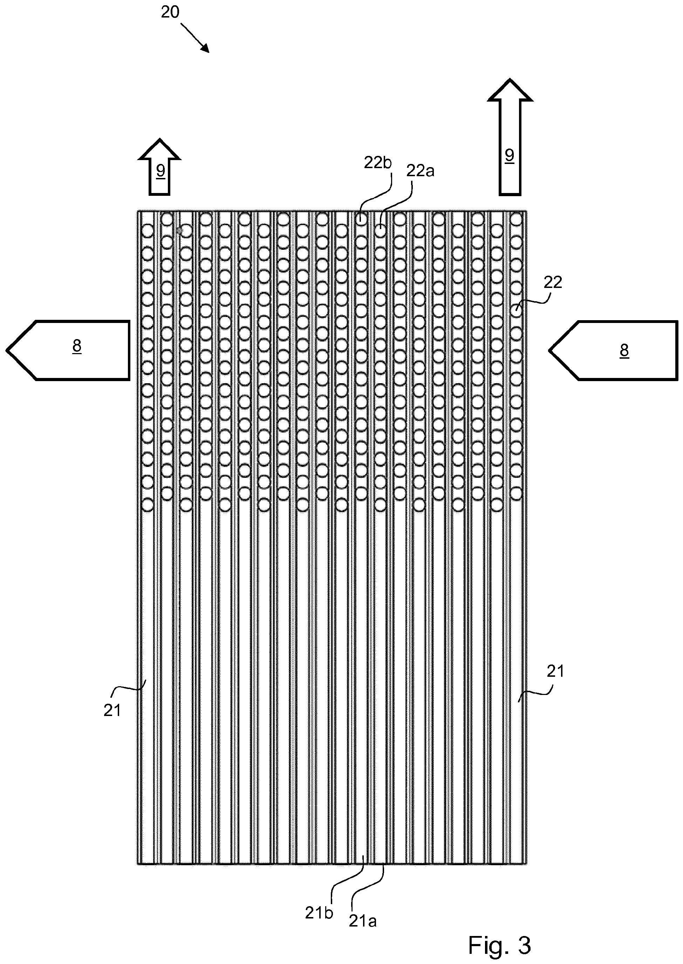

Fig. 1 ist eine Perspektivansicht der Wärmespeicherkörper eines erfindungsgemäßen Energiespeichers 100. Eine Seitenansicht hierzu ist in Fig. 2 gezeigt, während Fig. 3 eine Frontansicht zeigt. Der Energiespeicher 100 umfasst mehrere vertikal / aufrecht angeordnete Metallstangen (nachfolgend: Vertikalstangen 21) sowie mehrere horizontal angeordnete Metallstangen (nachfolgend: Horizontalstangen 22). Die Horizontalstangen 22 bilden Wärmespeicherkörper 20, wobei die Vertikalstangen 21 zu einem kleineren Anteil ebenfalls Wärmeenergie speichern und daher optional auch als Teil der Wärmespeicherkörper 20 angesehen werden können.

Über einen hier nicht dargestellten elektrischen Heizer wird elektrische Energie in Wärmeenergie umgewandelt und vorübergehend gespeichert, indem die Metallstangen 21, 22 erhitzt werden. Eine Energieentnahme ist möglich, indem ein Wärmetransferfluid (beispielsweise Gas oder Dampf) entlang der Metallstangen 21, 22 strömt und dabei erhitzt wird. Das erhitzte Wärmetransferfluid gibt die Wärmeenergie aus dem Energiespeicher 100 aus, beispielsweise zu Heizzwecken und/oder um wieder elektrische Energie zu erzeugen.

Zur Speicherung großer Energiemengen können die Vertikalstangen 21 beispielsweise ca. 8-14 Meter hoch sein und auch die Horizontalstangen 22 können ebenfalls diese Länge haben. Bei einer Erwärmung von mehreren Hundert Grad Celsius dehnen sich die Metallstangen 21, 22 beträchtlich aus.

Deshalb sind Form, Lagerung und Verbindung der Metallstangen 21, 22 wichtig, um Materialspannungen gering zu halten und Beschädigungen durch thermische Ausdehnungen zu vermeiden.

Eine vertikale Fixierung der Vertikalstangen 21 erfolgt allein in ihrem unteren Bereich. Nach oben hin sind die Vertikalstangen 21 hingegen nicht fixiert, so dass sie sich in dieser Richtung bei Temperaturansteigen frei ausdehnen können und Materialspannungen in dieser Richtung vermieden werden. Indem mehrere Vertikalstangen 21 nebeneinander (anstelle von beispielsweise einer Metallplatte) verwendet werden, sind zudem thermische Ausdehnungen in horizontaler Richtung unproblematisch. Thermische Ausdehnungen in horizontaler Richtung führen lediglich dazu, dass die Lufträume zwischen den Vertikalstangen 21 etwas kleiner werden; es treten aber keine Spannungen auf. Hierfür ist auch relevant, dass die Vertikalstangen 21 nicht direkt miteinander verbunden sind (abgesehen von dem später näher beschriebenen Fundament, auf dem sie stehen).

Die Horizontalstangen 22 werden von den Vertikalstangen 21 gehalten. Abgesehen vom Kontakt zu den Vertikalstangen 21 können sie frei von Luft umgeben sein und sind insbesondere an keiner weiteren Stelle fixiert. An den Vertikalstangen 21 selbst kann zum Halten eine Fixierung vorgesehen sein, allerdings kann auch eine einfache und effiziente Halterung dadurch erfolgen, dass die Vertikalstangen 21 Löcher / Bohrungen umfassen und jede Horizontalstange 22 in einer Bohrung gehalten wird. Hierdurch sind die Horizontalstange 22 gestützt, werden aber nicht in ihrer Position fixiert. Da höchstens an einer Stelle eine Fixierung erfolgt, können sich die Enden der Horizontalstangen 22 bei Temperaturanstiegen frei ausdehnen, wie durch die Pfeile in Fig. 1 veranschaulicht.

Für eine gute Raumnutzung können die Vertikalstangen 21 in einer Reihe angeordnet sein, welche sich senkrecht zur Längsachse der Horizontalstangen 22 erstreckt.

Horizontalstangen 22 sind nicht über die gesamte Höhe der Vertikalstangen 21 angebracht. Wie in den Figuren gezeigt, kann vielmehr ein unterer Bereich, beispielsweise mindestens die unteren 20% oder 30% einer jeden Vertikalstange 21, frei von Horizontalstangen 22 sein. Dadurch wird ein Abstand der Horizontalstangen 22 zu einem Fundament erzeugt, so dass wenig Wärme auf das Fundament übertragen wird.

In Fig. 3 kennzeichnen die Pfeile 8 einen Fluidstrom eines Gases oder eines anderen Wärmetransferfluides. Das Wärmetransferfluid kann durch den elektrischen Heizer erhitzt worden sein und wird nun zwischen den Horizontalstangen 22 durchgeleitet, um Wärme an diese abzugeben. Hierbei kühlt das Wärmetransferfluid ab, während es an den Horizontal- und Vertikalstangen 22, 21 entlang strömt. Die Vertikalstangen 21, die einströmendem Wärmetransferfluid zugewandt sind, werden dadurch stärker erhitzt als die Vertikalstangen 21, die in Strömungsrichtung weiter hinten gelegen sind. Dadurch sind die thermischen Ausdehnungen der mehreren Vertikalstangen 21 unterschiedlich. Dies wird durch die unterschiedlich langen Pfeile 9 in Fig. 3 symbolisiert. Diese unterschiedlichen thermischen Ausdehnungen erzeugen keine Spannungen, weil es keine starre Verbindung oder Kopplung der Vertikalstangen 21 miteinander gibt, an welcher unterschiedliche Ausdehnungen zu Spannungen führen würden.

Fig. 3 zeigt zudem, dass die Horizontalstangen 22a, die von einer bestimmten Vertikalstange 21a getragen werden, in ihren Höhen jeweils versetzt sind zu den Horizontalstangen 22b, die von einer benachbarten Vertikalstange 21b getragen werden. Hierdurch muss das Gas/Wärmetransferfluid, das in Richtung der Pfeile 8 an den Horizontalstangen 22a und 22b entlang strömt, teilweise um diese Horizontalstangen 22a und 22b herum strömen. Dadurch ist eine Wärmeübertrag höher, als wenn das Wärmetransferfluid geradlinig auf konstanter Höhe zwischen den Horizontalstangen 22a und 22b durchströmen könnte.

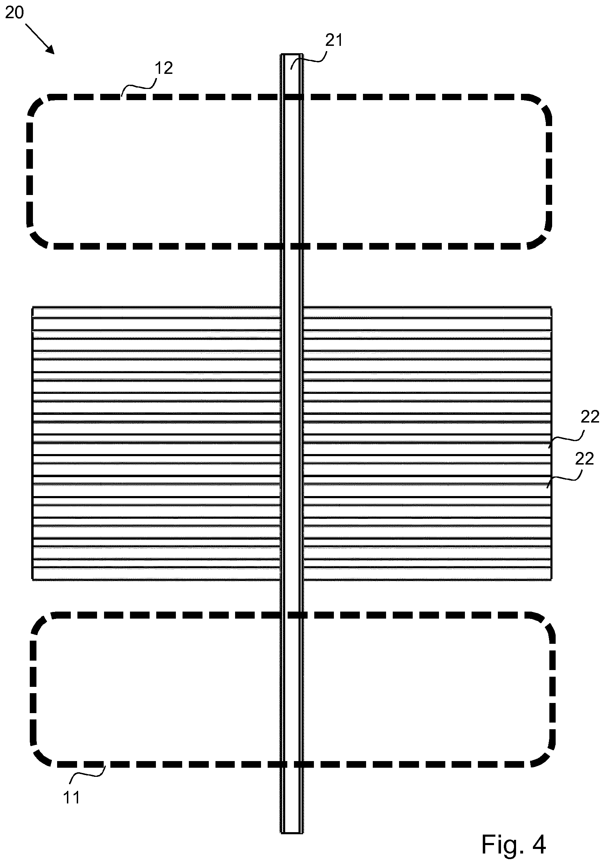

Fig. 4 zeigt Komponenten einer weiteren Ausführungsform eines erfindungsgemäßen Energiespeichers. Im Unterschied zum vorherigen Beispiel ragen hier die die Vertikalstangen 21 weiter nach oben über die Horizontalstangen 22 hinaus. Dadurch kann oberhalb der Horizontalstangen 22 eine obere Wärmeisoliermatte 12 angeordnet werden, durch welche die Vertikalstangen 21 hindurch verlaufen. Bei einer Gesamthöhe der Vertikalstangen 21 von beispielsweise 12 Metern kann die Wärmeisoliermatte 12 eine Höhe von z.B. 1 Meter haben. Ein oberer Bereich der Vertikalstangen 21, welcher oberhalb der Wärmeisoliermatte 12 liegt, kann nun durch ein Gestell oder eine Stütze gestützt werden (in horizontaler Richtung, so dass eine vertikale Expansion nach wie vor ungehindert möglich ist). Es wird durch die Wärmeisoliermatte 12 weniger Wärmeenergie auf dieses Gestell oder diese Stütze übertragen, so dass eine hohe mechanische Stabilität ohne größere Materialspannungen ermöglicht wird.

Zusätzlich zur oberen Wärmeisoliermatte 12 ist hier auch eine Wärmeisoliermatte 11 unterhalb der Horizontalstangen 22 vorhanden. Die Vertikalstangen 21 erstrecken sich wiederum durch die Wärmeisoliermatte 11 hindurch. Die Wärmeisoliermatte 11 kann auch bei dem Ausführungsbeispiel der Figuren 1 bis 3 ergänzt werden und bewirkt, dass ein Fundament weniger stark erhitzt wird und demgemäß geringere Spannungen durch thermische Ausdehnungen erfährt.

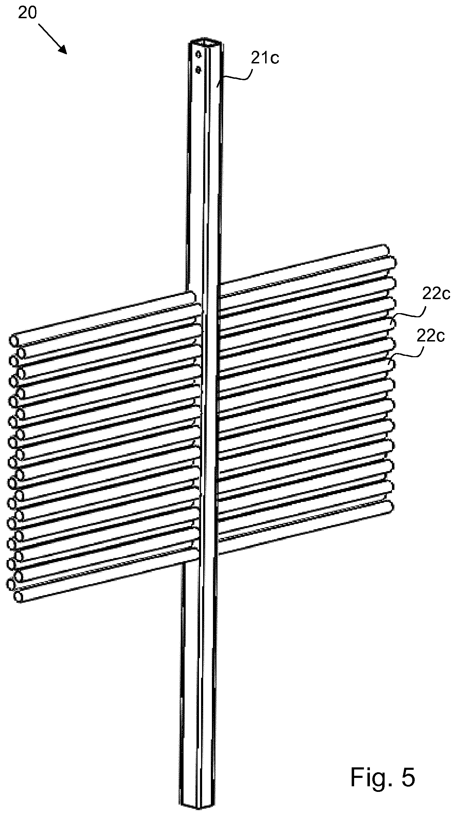

Fig. 5 zeigt die Wärmespeicherkörper 20 von Fig. 4 in einer Perspektivansicht. Hierbei ist erkennbar, dass die Horizontalstangen 22c, die an derselben Vertikalstange 21c gehalten sind, nicht alle entlang einer Geraden angeordnet sind. Jeweils benachbarte Horizontalstangen 22c sind vielmehr in einer Horizontalrichtung, die senkrecht zur Längsachse der Horizontalstangen 22c steht, zueinander versetzt. Außerdem sind benachbarte Horizontalstangen 22c in der Höhe (also der Vertikalrichtung) zueinander versetzt, wie auch bei den vorherigen Ausführungen. Durch diesen Versatz wird ebenfalls eine wellige Strömung des Wärmetransferfluides entlang der Metallstangen erreicht, ähnlich wie zu Fig. 3 beschrieben. Im Gegensatz zu Fig. 3 kann hierbei jedoch eine Vertikalstange mit ihren Horizontalstangen genau identisch zu einer benachbarten Vertikalstange mit ihren Horizontalstangen gestaltet sein, ohne dass hierzwischen ein Höhenversatz erforderlich wäre.

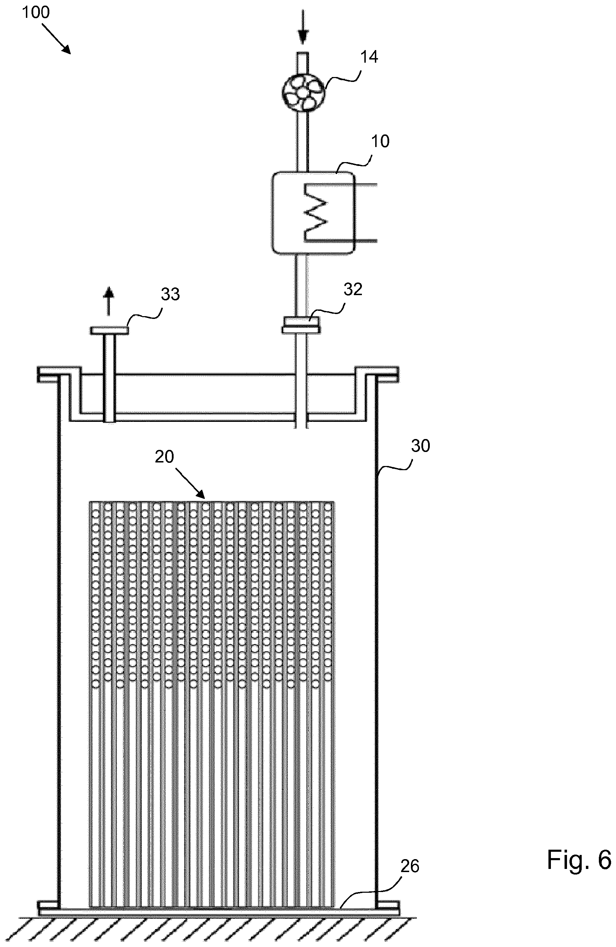

Fig. 6 zeigt nun schematisch den weiteren Aufbau einer Ausführungsform eines erfindungsgemäßen Energiespeichers 100. Die Wärmespeicherkörper 20 sind in einem Gehäuse 30 angeordnet, welches mindestens einen Einlass 32 für Wärmetransferfluid und mindestens einen Auslass 33 für das Wärmetransferfluid aufweist. Innerhalb des Gehäuses 30 kann das Wärmetransferfluid, beispielsweise ein inertes Gas, frei entlang der Metallstangen der Wärmespeicherkörper 20 strömen und so Wärmeenergie mit diesen austauschen. Der elektrische Heizer 10 ist hier außerhalb des Gehäuses 30 angeordnet und kann wahlweise Wärmetransferfluid erhitzen, bevor dieses durch den Einlass 32 eingeleitet wird. Alternativ kann der elektrische Heizer 10 auch innerhalb des Gehäuses 30 angeordnet sein, womit ein kleinerer Bereich sehr hohen Temperaturen ausgesetzt ist; insbesondere die zum Einlass 32 führenden Rohre könnten dann einfacher gestaltet sein und würden weniger Wärmeenergieverluste mit sich bringen. Der Einlass 32 und Auslass 33 können an einer Oberseite des Gehäuses 30 angeordnet sein, was für eine Anordnung mehrerer Energiespeicher nebeneinander vorteilhaft ist. In diesem Fall können innerhalb des Gehäuses 30 zusätzliche Leitungselemente zum Leiten des Wärmetransferfluides vorhanden sein, beispielsweise ein Innenzylinder (nicht dargestellt), wobei die Horizontalstangen innerhalb des Innenzylinders angeordnet sind und das Einlass 32 Wärmetransferfluid von oben in den Innenzylinder leitet, wobei der Innenzylinder im unteren Bereich offen ist und Wärmetransferfluid dann radial nach außen strömt, um außerhalb des Innenzylinders nach oben zum Auslass 33 zu strömen. Dabei kann eine Wärmeisoliermatte oder eine andere Horizontalplatte oberhalb des Fundaments angeordnet sein, um zu verhindern, dass das aus dem Innenzylinder ausströmende heiße Wärmetransferfluid an das Fundament strömt und dieses erhitzt.

Fig. 6 zeigt zudem eine Bodenplatte 26, auf welcher die Vertikalstangen stehen beziehungsweise gehalten sind. Da Wärmeenergie im Wesentlichen in den Horizontalstangen gespeichert wird und ein unterer Bereich der Vertikalstangen (insbesondere unterhalb einer Wärmeisolierungsschicht) verhältnismäßig wenig erhitzt wird, ist ein Wärmeübertrag auf die Bodenplatte 26 begrenzt. Vorteilhafterweise erzeugen daher die Vertikalstangen keine zu starken Wärmeausdehnungen und Materialspannungen in der Bodenplatte 26.

Fig. 6 zeigt außerdem einen Ventilator, Kompressor oder Pumpe 14, um das Wärmetransferfluid zu transportieren.

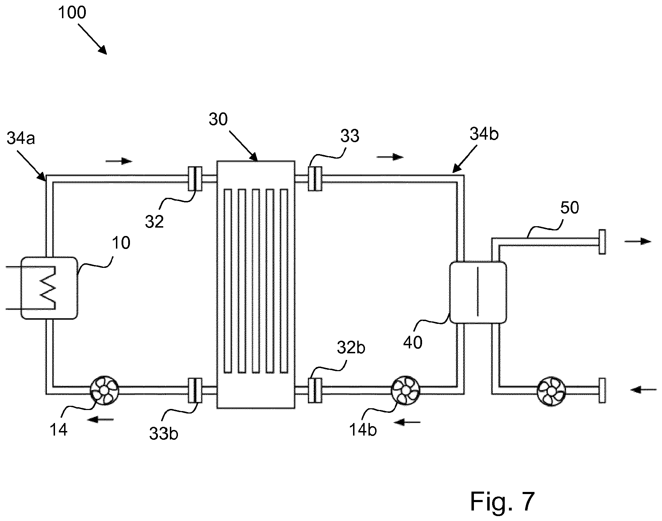

Ein weiteres Ausführungsbeispiel eines erfindungsgemäßen Energiespeichers 100 ist in Fig. 7 gezeigt. Das Gehäuse 30 umfasst hier einen weiteren Einlass 32b und Auslass 33b für Wärmetransferfluid. Dadurch umfasst ein Kreislauf des Wärmetransferfluides ersten Kreislaufabschnitt 34a und einen zweiten Kreislaufabschnitt 34b. Der erste Kreislaufabschnitt 34a verläuft vom Auslass 33b des Gehäuses 30 über einen Ventilator / Pumpe 14 und den elektrischen Heizer zum Einlass 32 des Gehäuses 30. Der zweite Kreislaufabschnitt 34b verläuft vom Auslass 33 des Gehäuses 30 über einen Wärmetauscher 40 und einen weiteren Ventilator / Pumpe 14b zum Einlass 32b des Gehäuses 30. Die beiden Ventilatoren / Pumpen 14 und 14b können hier unterschiedlich angesteuert werden, um ein Laden und Entladen des Energiespeichers zu steuern.

Der Wärmetauscher 40 ist mit einem weiteren Kreislauf 50 verbunden, so dass Wärmeenergie vom Wärmetransferfluid auf über den Wärmetauscher 40 auf ein anderes Fluid im Kreislauf 50 abgegeben werden kann.

Durch den erfindungsgemäßen Aufbau eines Energiespeichers kann in kostengünstiger und robuster Weise erreicht werden, dass thermische Expansionen von Komponenten des Energiespeichers unproblematisch sind. Gleichzeitig kann effizient Energie in den Energiespeicher eingebracht, gespeichert und entnommen werden.

## Patentansprüche

1. Energiespeicher zum Speichern von elektrischer Energie in Form von Wärmeenergie, umfassend:
- einen elektrischen Heizer (10) zum Umwandeln von elektrischer Energie in Wärmeenergie und
- Wärmespeicherkörper (20) zum Speichern von Wärmeenergie des elektrischen Heizers (10),
- wobei mehrere aufrecht angeordnete Vertikalstangen (21) vorgesehen sind, **dadurch gekennzeichnet,**
- **dass** die Vertikalstangen (21) an ihren unteren Enden gehalten sind, wobei eine thermische Expansion nach oben frei ermöglicht ist,
- **dass** die Wärmespeicherkörper (20) mehrere Horizontalstangen (22) umfassen, welche sich in horizontaler Richtung erstrecken, wobei an jeder Vertikalstange (21) mehrere der Horizontalstangen (22) gehalten sind,
- **dass** die horizontalen Enden jeder Horizontalstange (22) frei sind, so dass eine thermische Expansion in horizontaler Richtung frei ermöglicht ist.

2. Energiespeicher nach Anspruch 1,
**dadurch gekennzeichnet,**
**dass** jede Horizontalstange (22) mittig oder an ihrem Schwerpunkt an einer der Vertikalstangen (21) gehalten ist.

3. Energiespeicher nach Anspruch 1 oder 2,
**dadurch gekennzeichnet,**
**dass** die Horizontalstangen (22), die an derselben Vertikalstange (21) befestigt sind, in verschiedenen Höhen an dieser Vertikalstange (21) befestigt sind.

4. Energiespeicher nach einem der Ansprüche 1 bis 3,
**dadurch gekennzeichnet,**
**dass** jede Vertikalstange (21) an verschiedenen Höhen Bohrungen umfasst, wobei die Horizontalstangen (22) in den Bohrungen gehalten sind.

5. Energiespeicher nach einem der Ansprüche 1 bis 4,
**dadurch gekennzeichnet,**
**dass** die Vertikalstangen (21) an ihren oberen Enden in horizontaler Richtung gestützt sind, aber nach oben frei expandieren können.

6. Energiespeicher nach einem der Ansprüche 1 bis 5,
**dadurch gekennzeichnet,**
**dass** ein Rahmengestell vorhanden ist, welches die Vertikalstangen (21) in horizontaler Ebene stützt, aber in vertikaler Richtung eine freie Expansion der Vertikalstangen (21) erlaubt.

7. Energiespeicher nach einem der Ansprüche 1 bis 5,
**dadurch gekennzeichnet,**
**dass** die Horizontalstangen (22a), die von einer bestimmten der Vertikalstangen (21a) gehalten werden, in ihrer Höhe versetzt sind zu den Horizontalstangen (22b), die von einer dazu direkt benachbarten Vertikalstange (21b) gehalten werden.

8. Energiespeicher nach einem der Ansprüche 4 bis 7,
**dadurch gekennzeichnet,**
**dass** vertikal benachbarte Bohrungen derselben Vertikalstange (21c) in einer Horizontalrichtung zueinander versetzt sind,
so dass die Horizontalstangen (22c), die in diesen Bohrungen gehalten werden, in einer Horizontalrichtung, die senkrecht zu den Längsachsen dieser Horizontalstangen (22c) steht, zueinander versetzt sind.

9. Energiespeicher nach einem der Ansprüche 1 bis 8,
**dadurch gekennzeichnet,**
**dass** die Vertikalstangen (21) als Hohlröhren gebildet sind und
die Horizontalstangen (22) als Massivstangen gebildet sind.

10. Energiespeicher nach einem der Ansprüche 1 bis 9,
**dadurch gekennzeichnet,**
**dass** die Vertikalstangen (21) auf einem Fundament getragen sind und eine Wärmeisoliermatte (11) über dem Fundament und unter den Horizontalstangen (22) angeordnet ist, wobei sich die Vertikalstangen (21) durch die Wärmeisoliermatte (11) erstrecken.

11. Energiespeicher nach einem der Ansprüche 1 bis 10,
**dadurch gekennzeichnet,**
**dass** eine obere Wärmeisoliermatte (12) oberhalb der Horizontalstangen (22) angeordnet ist und sich die Vertikalstangen (21) durch die obere Wärmeisoliermatte (12) erstrecken.

12. Verfahren zum Speichern von elektrischer Energie in Form von Wärmeenergie mit einem Energiespeicher, umfassend die folgenden Schritte:
- Umwandeln von elektrischer Energie in Wärmeenergie durch einen elektrischen Heizer (10) und
- Übertragen der Wärmeenergie auf Wärmespeicherkörper (20) zur Energiespeicherung,
- wobei mehrere aufrecht angeordnete Vertikalstangen (21) vorgesehen werden,
**dadurch gekennzeichnet,**
- **dass** die Vertikalstangen (21) an ihren unteren Enden gehalten werden, wobei sie beim Erwärmen frei nach oben thermisch expandieren,
- **dass** an jeder Vertikalstange (21) als Wärmespeicherkörper (20) mehrere Horizontalstangen (22) gehalten werden, welche sich in horizontaler Richtung erstrecken und mit denen Wärmeenergie des elektrischen Heizers (10) gespeichert wird,
- **dass** die horizontalen Enden jeder Horizontalstange (22) frei sind, so dass die Horizontalstangen (22) beim Erwärmen in horizontaler Richtung frei expandieren.

## Claims

1. An energy store for storing electrical energy in the form of thermal energy, comprising:
- an electric heater (10) for converting electrical energy into thermal energy and
- heat-storing elements (20) for storing thermal energy of the electric heater (10),
- wherein a plurality of vertical rods (21) arranged upright are provided, **characterized in that**
- the vertical rods (21) are supported at their lower ends, wherein a thermal expansion upwards is rendered freely possible,
- the heat-storing elements (20) comprise a plurality of horizontal rods (22) which extend in a horizontal direction, wherein a plurality of the horizontal rods (22) are supported on each vertical rod (21),
- the horizontal ends of each horizontal rod (22) are free so that a thermal expansion in a horizontal direction is rendered freely possible.

2. The energy store according to claim 1,
**characterized in that**
each horizontal rod (22) is supported centrally or at its centre of gravity on one of the vertical rods (21).

3. The energy store according to claim 1 or 2,
**characterized in that**
the horizontal rods (22) which are attached to the same vertical rod (21) are attached to said vertical rod (21) at different heights.

4. The energy store according to one of claims 1 to 3,
**characterized in that**
each vertical rod (21) comprises drilled holes at different heights, wherein the horizontal rods (22) are supported in the drilled holes.

5. The energy store according to one of claims 1 to 4,
**characterized in that**
the vertical rods (21) are braced at their upper ends in a horizontal direction but are able to expand upwards freely.

6. The energy store according to one of claims 1 to 5,
**characterized in that**
a frame rack is provided which braces the vertical rods (21) in a horizontal plane but allows a free expansion of the vertical rods (21) in a vertical direction.

7. The energy store according to one of claims 1 to 5,
**characterized in that**
the horizontal rods (22a) supported by a particular vertical rod (21a) among the vertical rods (21a) are staggered in height in relation to the horizontal rods (22b) supported by a vertical rod (21b) directly adjacent thereto.

8. The energy store according to one of claims 4 to 7,
**characterized in that**
vertically adjacent drilled holes of the same vertical rod (21c) are staggered in relation to one another in a horizontal direction
so that the horizontal rods (22c) supported in these drilled holes are staggered in relation to one another in a horizontal direction perpendicular to the longitudinal axes of these horizontal rods (22c).

9. The energy store according to one of claims 1 to 8,
**characterized in that**
the vertical rods (21) are formed as hollow tubes and
the horizontal rods (22) are formed as solid rods.

10. The energy store according to one of claims 1 to 9,
**characterized in that**
the vertical rods (21) are supported on a foundation and a thermal insulation mat (11) is arranged over the foundation and under the horizontal rods (22), wherein the vertical rods (21) extend through the thermal insulation mat (11).

11. The energy store according to one of claims 1 to 10,
**characterized in that**
an upper thermal insulation mat (12) is arranged above the horizontal rods (22) and the vertical rods (21) extend through the upper thermal insulation mat (12).

12. A method for storing electrical energy in the form of thermal energy with an energy store, comprising the following steps:
- converting electrical energy into thermal energy by means of an electrical heater (10) and
- transferring the thermal energy to heat-storing elements (20) for energy storage,
- wherein a plurality of vertical rods (21) arranged upright are provided,
**characterized in that**
- the vertical rods (21) are supported at their lower ends, wherein they expand thermally freely upwards when heated,
- a plurality of horizontal rods (22) extending in a horizontal direction and with which thermal energy of the electric heater (10) is stored are supported as heat-storing elements (20) on each vertical rod (21),
- the horizontal ends of each horizontal rod (22) are free so that the horizontal rods (22) expand freely in a horizontal direction when heated.

## Revendications

1. Accumulateur d'énergie pour stocker de l'énergie électrique sous forme d'énergie thermique, comprenant :
- un dispositif de chauffage électrique (10) pour convertir l'énergie électrique en énergie thermique et
- des éléments de stockage de chaleur (20) pour stocker l'énergie thermique du dispositif de chauffage électrique (10),
- une pluralité de tiges verticales (21) disposées debout étant prévues,
**caractérisé en ce que**
- les tiges verticales (21) sont supportées à leurs extrémités inférieures, une expansion thermique vers le haut étant rendue librement possible,
- les éléments de stockage de chaleur (20) comprennent une pluralité de tiges horizontales (22) qui s'étendent dans une direction horizontale, une pluralité des tiges horizontales (22) étant supportées sur chaque tige verticale (21),
- les extrémités horizontales de chaque tige horizontale (22) sont libres de sorte qu'une expansion thermique dans une direction horizontale est rendue librement possible.

2. Accumulateur d'énergie selon la revendication 1,
**caractérisé en ce que**
chaque tige horizontale (22) est supportée au centre ou à son centre de gravité sur l'une des tiges verticales (21).

3. Accumulateur d'énergie selon la revendication 1 ou 2,
**caractérisé en ce que**
les tiges horizontales (22) qui sont fixées à la même tige verticale (21) sont fixées à ladite tige verticale (21) à différentes hauteurs.

4. Accumulateur d'énergie selon l'une des revendications 1 à 3,
**caractérisé en ce que**
chaque tige verticale (21) comprend des trous percés à différentes hauteurs, les tiges horizontales (22) étant supportées dans les trous percés.

5. Accumulateur d'énergie selon l'une des revendications 1 à 4,
**caractérisé en ce que**
les tiges verticales (21) sont soutenues à leurs extrémités supérieures dans une direction horizontale mais peuvent se dilater librement vers le haut.

6. Accumulateur d'énergie selon l'une des revendications 1 à 5,
**caractérisé en ce qu'**
un châssis de cadre est pourvu qui soutient les tiges verticales (21) dans un plan horizontal mais permet une expansion libre des tiges verticales (21) dans une direction verticale.

7. Accumulateur d'énergie selon l'une des revendications 1 à 5,
**caractérisé en ce que**
les tiges horizontales (22a) qui sont supportées par une tige verticale (21a) particulière parmi les tiges verticales (21a) sont décalées en hauteur par rapport aux tiges horizontales (22b) supportées par une tige verticale (21b) directement adjacente à celles-ci.

8. Accumulateur d'énergie selon l'une des revendications 4 à 7,
**caractérisé en ce que**
des trous percés verticalement adjacents d'une même tige verticale (21c) sont décalés les uns par rapport aux autres dans une direction horizontale
de sorte que les tiges horizontales (22c) supportées dans ces trous percés sont décalées les unes par rapport aux autres dans une direction horizontale perpendiculaire aux axes longitudinaux des dites tiges horizontales (22c).

9. Accumulateur d'énergie selon l'une des revendications 1 à 8,
**caractérisé en ce que**
les tiges verticales (21) sont réalisées sous forme de tubes creux et
les tiges horizontales (22) sont réalisées sous forme de tiges solides.

10. Accumulateur d'énergie selon l'une des revendications 1 à 9,
**caractérisé en ce que**
les tiges verticales (21) sont supportées sur une fondation et un tapis d'isolation thermique (11) est disposé sur la fondation et sous les tiges horizontales (22), les tiges verticales (21) s'étendant à travers le tapis d'isolation thermique (11).

11. Accumulateur d'énergie selon l'une des revendications 1 à 10,
**caractérisé en ce qu'**
un tapis d'isolation thermique supérieur (12) est disposé au-dessus des tiges horizontales (22) et les tiges verticales (21) s'étendent à travers le tapis d'isolation thermique supérieur (12).

12. Procédé de stockage d'énergie électrique sous forme d'énergie thermique avec un accumulateur d'énergie, comprenant les étapes suivantes :
- convertir de l'énergie électrique en énergie thermique au moyen d'un dispositif de chauffage électrique (10) et
- transférer l'énergie thermique à des éléments de stockage de chaleur (20) pour l'accumulation d'énergie,
- une pluralité de tiges verticales (21) disposées debout étant prévues,
**caractérisé en ce que**
- les tiges verticales (21) sont supportées à leurs extrémités inférieures, les tiges verticales (21) se dilatant thermiquement librement vers le haut lorsqu'elles sont chauffées,
- une pluralité de tiges horizontales (22) s'étendant dans une direction horizontale et avec lesquelles l'énergie thermique du dispositif de chauffage électrique (10) est stockée sont supportées comme éléments de stockage de chaleur (20) sur chaque tige verticale (21),
- les extrémités horizontales de chaque tige horizontale (22) sont libres de sorte que les tiges horizontales (22) se dilatent librement dans une direction horizontale lorsqu'elles sont chauffées.
